Europäisches Patentamt

European Patent Office

Office européen des brevets

(19)

(11) Veröffentlichungsnummer: **0 121 043 B1**

## (12) EUROPÄISCHE PATENTSCHRIFT

(45) Veröffentlichungstag der Patentschrift: 27.03.91

(21) Anmeldenummer: 84100659.6

(22) Anmeldetag: 23.01.84

(51) Int. Cl.⁵: **C01G 25/02**, C01F 7/02, C01F 7/14

(54) Verfahren zur Herstellung feinverteilter Dispersionen von Metalloxiden in Aluminiumhydroxid.

(30) Priorität: 07.03.83 DE 3308008

(43) Veröffentlichungstag der Anmeldung:
10.10.84 Patentblatt 84/41

(45) Bekanntmachung des Hinweises auf die
Patenterteilung:
27.03.91 Patentblatt 91/13

(84) Benannte Vertragsstaaten:
AT CH DE FR GB IT LI SE

(56) Entgegenhaltungen:
EP-A- 0 078 632
DE-A- 3 131 088
DE-B- 1 223 819
FR-A- 2 446 799

(73) Patentinhaber: VEREINIGTE ALUMINIUM-
WERKE AKTIENGESELLSCHAFT
Berlin - Bonn Postfach 2468 Georg-
von-Boeselager-Strasse 25
W-5300 Bonn 1(DE)

(72) Erfinder: Bielfeldt, Klaus, Dr., Dipl.-Chem.
Terrassenweg 18
W-5330 Königswinter 41(DE)
Erfinder: Braun, Dieter J., Dr., Dipl.-Chem.
Reichensteinstrasse 47c
W-5210 Kriegsdorf(DE)

(74) Vertreter: Müller-Wolff, Thomas, Dipl.-Ing.
c/o Vereinigte Aluminium-Werke AG Patentabteilung Postfach 2468
W-5300 Bonn 1(DE)

## EP 0 121 043 B1

**Beschreibung**

Gegenstand der Erfindung ist ein Verfahren zur Herstellung feinverteilter Dispersionen von Metalloxiden in Aluminiumhydroxid.

Üblicherweise werden solche feinverteilten Dispersionen durch gemeinsame Fällung der Hydroxide und Erhitzen der erhaltenen Produkte gewonnen. Derartige Verfahren sind in folgenden Veröffentlichungen beschrieben:

Tonerdeindustrie-Zeitung 94 (1970), Nr. 2, S. 45 ff.

Journal of Materials Science 16 (1981), S. 3447-3451.

Diese Methoden liefern zwar feinverteilte Dispersionen der Stoffe untereinander. Sie sind jedoch mit erheblichem Aufwand verbunden, da sowohl Salzlösungen der eingesetzter Metalloxide als auch aluminiumhaltige Lösungen getrennt hergestellt werden müssen. Bei der Verwendung von Salzgemischen ergibt sich die zusätzliche Schwierigkeit, daß der pH-Wert bei der Hydroxidfällung der einzelnen Komponenten nicht gleich ist, so daß bereits im Prozeß eine ungenügende Vermischung der Komponenten auftritt.

Ein weiterer Nachteil des bekannten Verfahrens ist es, daß eine große Menge an Abfallsalzen während des zur Fällung der Hydroxide erforderlichen Neutralisationsprozesses gebildet wird. Diese Abfallsalze werden in den Fällungsprodukten eingeschlossen und können nur durch sorgfältiges Waschen zurückgewonnen werden (siehe US-PS 3,586,635)

Ein anderes Verfahren zur Herstellung von Hydroxiddispersionen steht in der sog. Sol-Gel-Technik, die beispielsweise für die Elemente Uran, Zirkonium, Thorium, Magnesium, Zink, Nickel, Aluminium und Titan verwendet wird (Journal Amer. Ceramic Soc., Bull. 51, S. 158-161). Die Partikelgröße der Ausgangssole ist sehr klein und die Feststoffkonzentration normalerweise sehr niedrig. Um zu einem trockenen Produkt zu gelangen, muß der hohe Wassergehalt erst durch aufwendige Filtration erniedrigt werden. Das getrocknete Produkt weist dann eine sehr niedrige Schüttdichte auf.

Als weitere Möglichkeit der Herstellung von Dispersionen verschiedenster Metalloxide ineinander kann die Hydrolyse metallorganischer Verbindungen angesehen werden, die bei Oxidgemischen aus $ZrO_2$` $TiO_2$ und $Al_2O_3$ bekannt ist. Ein derartiges Verfahren ist im Journal Amer. Ceramio Soc. 50, S. 532-577 beschrieben.

Aufgabe der vorliegenden Erfindung ist es, die Herstellung feinverteilter Dispersionen von Metalloxiden und/oder Metallhydroxiden in Aluminiumhydroxid mit niedrigem Wassergehalt, also hoher Feststoffkonzentration im filterfeuchten Zustand und homogener Vermischung durch ein einfaches, umweltfreundliches Verfahren zu ermöglichen. Die Aufgabe wird erfindungsgemäß durch die in den Ansprüchen angegebenen Merkmale gelöst.

Das erfindungsgemäße Verfahren besteht in wesentlichen darin, daß das zu dispergierende Metalloxid und/oder Hydroxid als Impfstoff für eine übersättigte Natriumaluminatlauge benutzt wird. Die Effektivität des Verfahrens wird besonders hoch, wenn zusätzlich zu dem Metalloxid auch mit Aluminiumhydroxid geimpft wird, wobei es besonders günstig ist, die Impfung mit Aluminiumhydroxid erst nach Beendigung der Impfung mit dem Metalloxid durchzuführen.

Anhand zahlreicher Versuche hat sich gezeigt, daß bei einer mittleren Korngröße des Metalloxids von weniger als 5 μm, hohe Ausbeuten bei geringen Kristallisationszeiten erreicht werden können. Dies wird durch die Mahlung erzielt, da "aktivierte" Kristalloberflächen für die Impfung zur Verfügung stehen und dadurch die Kristallisation beschleunigt wird. Dieser Effekt wird weiter verstärkt, wenn die mittlere Korngröße des Zusatzimpfstoffes Aluminiumhydroxid weniger als 3 μm beträgt.

Grundsätzlich sind alle Metalloxide und Metallhydroxide als Impfstoff verwendbar, sofern sie in Natriumaluminatlauge bei Raumtemperatur unlöslich sind. Zur Herstellung von Schneidkeramik eignet sich jedoch die Verwendung von Oxiden der Metalle der dritten und/oder vierten Nebengruppe des periodischen Systems der Elemente besonders vorteilhaft, in einer Impfmenge von 2-40 Gew.-% des in der Aluminatlauge gelösten Aluminiumhydroxids. Bei der Weiterverarbeitung der erfindungsgemäß hergestellten Dispersion zu Schneidkeramiken mit hoher Thermoschockbeständigkeit ist es vorteilhaft, als Metalloxid Zirkondioxid, bevorzugt teilstabilisiertes Zirkondioxid, einzusetzen. Es können aber auch Oxide der Metalle Magnesium, Kobalt, Nickel, Zink, Chrom, Eisen, Thorium oder Oxide der seltenen Erden verwendet werden.

Im folgenden wird die Erfindung anhand von mehreren Ausführungsbeispielen näher erläutert:

Beispiel 1

Eine aus dem zur großtechnischen Gewinnung von $Al_2O_3$ bekannten Bayer-Prozeß stammende Natriumaluminatlauge (140 g $Na_2O_{fr.}$/1, Molverhältnis $Na_2O/Al_2O_3$: 1,6) wurde in thermostatisierten Bechergläsern

gerührt und mit $ZrO_2$ ($d_{50}$ : 6,3 μm) geimpft. Die Impfermenge betrug 2 g/l, 10 g/l bzw. 20 g/l. Die Kristallisationszeiten betrugen 1, 6, 24, 48, 72 bzw. 96 Stunden. Die Temperatur betrug in allen Fällen 40°C. Nach 24 Stunden weisen bei rasterelektronenmikroskopischer Betrachtung alle $ZrO_2$-Teilchen eine Hülle von $Al(OH)_3$ auf. Die unten angegebene Tabelle zeigt die Kristallisationszeiten an $ZrO_2$ sowie die prozentuale Ausbeute des in der Lauge vorhandenen $Al(OH)_3$.

Das Beispiel zeigt, daß durch Variation von Impfermengen und Kristallisationszeit der prozentuale Anteil an $ZrO_2$ stark variiert werden kann. Die Kristallisationszeiten sollten zwischen 24 und 72 Stunden liegen. Unterhalb von 24 Stunden setzt zwar Kristallisation ein, die Ausbeute ist jedoch sehr gering. Oberhalb von 72 Stunden geht die Ausfällung bei Impfraten von 10 bis 50 g/l nur noch sehr langsam voran. Höhere Impfmengen haben sich in Versuchen als nicht sinnvoll erwiesen, da nicht alle $ZrO_2$-Partikel von Aluminiumhydroxid umschlossen waren und die Gefahr einer Separation der $ZrO_2$-Teilchen von den Aluminiumhydroxidteilchen bei der Aufarbeitung des Niederschlags bestanden hätte.

| Kristallisationszeit | Impfermenge $ZrO_2$ | Gesamtausbeute $ZrO_2$/Al(OH)$_3$ | % $ZrO_2$ im Produkt | Impfermenge/Al(OH)$_3$ in der Lauge | Ausbeute an Al(OH)$_3$ |
|---|---|---|---|---|---|
| 1 | 10 g/l | 10.6 g/l | 94.3 % | 6.9 % | 0.3 % |
| 6 | 10 g/l | 18.3 g/l | 54.6 % | 6.9 % | 3.8 % |
| 24 | 10 g/l | 52.8 g/l | 18.9 % | 6.9 % | 19.5 % |
| 48 | 10 g/l | 63.5 g/l | 15.7 % | 6.9 % | 24.3 % |
| 72 | 10 g/l | 83.4 g/l | 12.0 % | 6.9 % | 33.4 % |
| 96 | 10 g/l | 86.9 g/l | 11.5 % | 6.9 % | 34.9 % |
| 24 | 20 g/l | 65.9 g/l | 30.3 % | 13.9 % | 20.9 % |
| 48 | 20 g/l | 75.8 g/l | 26.3 % | 13.9 % | 25.4 % |
| 72 | 20 g/l | 9,7.2 g/l | 20.5 % | 13.9 % | 35.1 % |
| 24 | 50 g/l | 97.2 g/l | 51.4 % | 34.7 % | 21.5 % |
| 48 | 50 g/l | 106.7 g/l | 46.8 % | 34.7 % | 25.8 % |
| 72 | 50 g/l | 129.2 g/l | 38.7 % | 34.7 % | 36 % |

Beispiel 2

Beispiel 2 wurde in gleicher Weise durchgeführt wie Beispiel 1, jedoch wurde das eingesetzte $ZrO_2$ unmittelbar vor der Impfung auf eine Korngröße von $d_{50}$ : 1,2 $\mu$m gemahlen. Es zeigt sich, daß der feinere Impfer neben einer durch die geringe Korngröße bedingten besseren Verteilung des $ZrO_2$ in der Mischung auch höhere Ausbeuten an Al(OH)$_3$ bewirkt. Zusätzlich zu Beispiel 1 ist die mittlere Korngröße der $ZrO_2$/Al-(OH)$_3$ -Teilchen angegeben.

| Kristallisationszeit | Impfermenge | Gesamtausbeute $ZrO_2$/Al(OH)$_3$ | % $ZrO_2$ im Produkt | $d_{50}$ d. Prod. |
|---|---|---|---|---|
| 24 | 10 g/l | 91.9 g/l | 10.8% | 9 $\mu$m |
| 48 | 10 g/l | 121.8 g/l | 8.2% | 10 $\mu$m |
| 72 | 10 g/l | 131.1 g/l | 7.6% | 10 $\mu$m |
| 24 | 20 g/l | 120.9 g/l | 16.5% | 5.7 $\mu$m |
| 48 | 20 g/l | 133.9 g/l | 14.9% | 6.0 $\mu$m |
| 72 | 20 g/l | 139.1 g/l | 14.4% | 6.4 $\mu$m |

Beispiel 3

Beispiel 3 wurde analog zu Beispiel 2 durchgeführt. Zusätzlich wurde jedoch mit Al(OH)$_3$ geimpft, um die Gesamtausbeute weiter zu verbessern und die Korngröße der einzelnen Körner des Produkts zu senken. Dem $ZrO_2$ -Impfer wurde hierzu 1 g/l eines sehr feinen Al(OH)$_3$ -Impfers ($d_{50}$: 1,2 $\mu$m) beigemischt. Der Al(OH)$_3$ - Impfer war vorher auf die Korngröße vermahlen worden, um möglichst hohe Impfaktivität zu zeigen. Die Kristallisation auf dem Impfer tritt als Konkurrenzreaktion zur Kristallisation auf $ZrO_2$ ein und bewirkt die Bildung einer dünneren Schicht von Al(OH)$_3$ auf den $ZrO_2$ -Körnern.

| Kristallisationszeit | Impfermenge | Gesamtausbeute | % $ZrO_2$ im Produkt | $d_{50}$ d. Produktes |
|---|---|---|---|---|
| 24 | 20 g $ZrO_2$/1 g Al(OH)$_3$ | 130.2 g/l | 15.4 | 2.6 $\mu$m |
| 28 | " | 136.8 g/l | 14.6 | 2.5 $\mu$m |
| 72 | " | 140.3 g/l | 14.3 | 2.4 $\mu$m |

Erfolgt die Impfung mit Al(OH)$_3$ um 24 Stunden bzw. 48 Stunden zeitversetzt, kann während der ersten Kristallisationsphase die Al(OH)$_3$ -Schicht ohne Konkurrenzreaktion wachsen. Das Ergebnis liegt bezüglich der Korngröße zwischen den Beispielen 2 und 3.

## Ansprüche

1. Verfahren zur Herstellung feinverteilter Dispersionen von Metalloxiden und/oder Metallhydroxiden in Aluminiumhydroxid, dadurch gekennzeichnet, daß eine übersättigte Natriumaluminat-Lauge mit Partikeln in einer Menge von 2-40 Gew.-% des in der Aluminatlauge gelösten Aluminiumhydroxids geimpft wird, wobei die Partikel die eine mittlere Korngröße von <5 μm aufweisen aus mindestens einem in Natriumaluminatlauge unlöslichen Oxid der Metalle der dritten und/oder vierten Nebengruppe des periodischen Systems der Elemente bestehen, und daß nach einer Verweilzeit von mehr als einer Stunde der auskristallisierte Feststoff von der Lösung abgetrennt und getrocknet wird.

2. Verfahren nach Anspruch 1, dadurch gekennzeichnet, daß die Kristallisation für 24 bis 72 Stunden durchgeführt wird.

3. Verfahren nach einem der vorhergehenden Ansprüche, dadurch gekennzeichnet, daß zusätzlich mit Aluminiumhydroxid geimpft wird.

4. Verfahren nach einem der vorhergehenden Ansprüche, dadurch gekennzeichnet, daß die Imfung mit Aluminiumhydroxid nach Abschluß der Impfung mit dem Metalloxid erfolgt.

5. Verfahren nach einem der vorhergehenden Ansprüche, dadurch gekennzeichnet, daß die Metalloxide und/oder Metallhydroxide gemahlen und unmittelbar danach als Impfer eingebracht werden.

6. Verfahren nach einem der vorhergehenden Ansprüche, dadurch gekennzeichnet, daß die mittlere Korngröße des zusätzlich eingesetzten Aluminiumhydroxids <3 μm beträgt.

7. Verfahren nach einem der vorhergehenden Ansprüche, dadurch gekennzeichnet, daß als Metalloxid Zirkondioxid eingesetzt wird.

## Claims

1. Process for producing finely divided dispersions of metal oxides and/or metal hydroxides in aluminium hydroxide, characterized in that a supersaturated sodium aluminate liquor is seeded with particles in a quantity of 2-40 wt.% of the aluminium hydroxide dissolved in the aluminate liquor, and the particles, which have a mean particle size of less than 5 μm, consist of at least one oxide, which is insoluble in sodium aluminate liquor, of the metals of the third and/or fourth subgroup of the periodic system of the elements, and in that after a residence time of more than one hour the solid which has crystallized out is separated from the solution and dried.

2. Process according to Claim 1, characterized in that the crystallization is carried out for 24 to 72 hours.

3. Process according to one of the preceding Claims, characterized in that seeding is also carried out with aluminium hydroxide.

4. Process according to one of the preceding Claims, characterized in that the seeding with aluminium hydroxide takes place after completion of the seeding with the metal oxide.

5. Process according to one of the preceding Claims, characterized in that the metal oxides and/or metal hydroxides are ground and then immediately used as seeding agents.

6. Process according to one of the preceding Claims, characterized in that the mean particle size of the additionally-used aluminium hydroxide is less than 3 μm.

7. Process according to one of the preceding Claims, characterized in that zirconium oxide is used as the metal oxide.

## Revendications

1. Procédé de préparation de dispersions fines d'oxydes métalliques et/ou d'hydroxydes métalliques dans l'hydroxyde d'aluminium, caractérisé en ce que l'on ensemence une lessive sursaturée d'aluminate de sodium par des particules en quantités de 2 à 40% du poids de l'hydroxyde d'aluminium dissous dans la lessive d'aluminate, les particules ayant une dimension de grain moyenne inférieure à 5 $\mu$m et consistant en au moins un oxyde des métaux du troisième et/ou du quatrième sous-groupe de la Classification Périodique des Eléments, insoluble dans la lessive d'aluminate de sodium, et en ce que, après une durée de contact supérieure à 1 h, on sépare la matière solide qui a cristallisé de la solution et on la sèche.

2. Procédé selon la revendication 1, caractérisé en ce que la cristallisation est réalisée pendant une durée de 24 à 72 h.

3. Procédé selon l'une des revendications qui précèdent, caractérisé en ce que l'on ensemence en outre par de l'hydroxyde d'aluminium.

4. Procédé selon l'une des revendications qui précèdent, caractérisé en ce que l'ensemencement par l'hydroxyde d'aluminium est réalisé après la fin de l'ensemencement par l'oxyde métallique.

5. Procédé selon l'une des revendications qui précèdent, caractérisé en ce que les oxydes métalliques et/ou hydroxydes métalliques sont broyés et utilisés ensuite immédiatement en tant qu'amorces d'ensemencement.

6. Procédé selon l'une des revendications qui précèdent, caractérisé en ce que la dimension de grain moyenne de l'hydroxyde d'aluminium utilisé pour l'ensemencement complémentaire est inférieure à 3 $\mu$m.

7. Procédé selon l'une des revendications qui précèdent, caractérisé en ce que l'oxyde métallique utilisé est le dioxyde de zirconium.